# EUROPEAN PATENT APPLICATION

(11) **EP 4 826 248 A1**
(43) Date of publication of application: **21.10.2026**
(21) Application number: 25842434.0
(22) Date of filing: 03.04.2025
(51) Int. Cl.: F04C 11/00, F04C 2/10

(54) **MOTOR PUMP**

(30) Priority: 13.01.2025 CN 202510047753
(71) Applicant: Nanjing Weifu Jinning Co., Ltd, Nanjing, Jiangsu 210038 (CN)
(72) Inventor: WU, Guowei, Jiangsu 210038 (CN); HE, Bin, Jiangsu 210038 (CN); ZHOU, Lingkang, Jiangsu 210038 (CN); QIAN, Wei, Jiangsu 210038 (CN); CHEN, Congcong, Jiangsu 210038 (CN); ZHANG, Xueqin, Jiangsu 210038 (CN); ZHANG, Shuai, Jiangsu 210038 (CN)
(74) Representative: Bayramoglu et al.
(86) International application number: PCT/CN2025/087036
(87) International publication number: WO 2026/148741

(57) **Abstract**

Provided is a motor pump, relating to the field of applications of the automotive active suspension technology. The motor pump includes a controller module, a motor module, and a pump module. The controller module is configured to send a driving signal to the motor module so as to drive the pump module. The controller module includes a controller housing and a controller assembly. The motor module includes a motor housing and a motor assembly. The pump module includes a pump cover and a pump body. The controller assembly is electrically connected to the motor assembly. The motor assembly is connected to the pump body. The pump body is partially located inside the motor housing, while the pump cover protrudes from the motor housing, and the pump module is coaxially connected to the motor module. The controller housing is stacked with the motor housing. The flow path for the medium leaking from the pump head is optimally designed to allow more hydraulic oil to flow through the motor rotor cavity, carry away the heat from the motor, and finally flow to the low-pressure oil cavity of the pump head via the one-way valve, thereby improving the heat dissipation effect, and increasing the operational duration and service life of the motor pump.

## Description

### TECHNICAL FIELD

The present disclosure relates to the field of applications of the automotive active suspension technology, and in particular, to a motor pump.

### BACKGROUND TECHNOLOGY

A suspension motor pump, which is an electric hydraulic pump arranged on a vehicle, can drive a shock absorber to operate so as to achieve displacement control of wheels in the Z-direction.

In the related art, the suspension motor pump is typically designed such that an electronic controller, a motor, and an oil pump are integrated together. Specifically, the controller and the oil pump are installed at both ends of the motor, respectively, and the three components are arranged in a coaxial arrangement.

However, in the related art, a leaking medium from the oil pump flows into a rotor cavity of the motor and then immediately flows out of a one-way valve on a pump body. The leaking medium does not circulate widely within the rotor cavity of the motor, and the heat dissipation for the motor mostly relies on natural convection.

### CONTENT OF THE INVENTION

In the present disclosure, the leakage oil path of the motor pump is optimally designed, and the one-way valve is positioned on the pump cover. As a result, the majority of the medium leaking from the oil pump flows into one end of the motor rotor cavity and out from the other end of the motor rotor cavity, and returns through the motor shaft to the pump cover volume cavity at the other end. Subsequently, oil returns through the one-way valve. Forced convective heat dissipation of the medium is achieved and the flow rate of the medium flowing into the motor rotor cavity is increased, thereby improving the heat dissipation effect of the motor. Thus, the motor pump can operate for a longer time, and its performance and service life are improved.

The motor pump includes a controller module, a motor module, and a pump module;
where the controller module is configured to send a driving signal to the motor module so as to drive the pump module;
the controller module includes a controller housing and a controller assembly;
the motor module includes a motor housing and a motor assembly;
the pump module includes a pump cover and a pump body;
the controller assembly is electrically connected to the motor assembly;
the motor assembly is connected to the pump body;
the pump body is partially located inside the motor housing, while the pump cover protrudes from the motor housing, and the pump module is coaxially connected to the motor module;
the controller housing is stacked with the motor housing;
a pump cover cavity and a pump body cavity are formed inside the pump module;
the pump body and an interior of the motor housing enclose a motor rotor cavity;
the pump cover cavity, the pump body cavity, and the motor rotor cavity are configured to form a medium passage, and a medium flows into the motor rotor cavity via the pump body cavity to achieve forced convective heat exchange.

In an optional embodiment, the motor housing and the controller housing are implemented as an integrated housing;
a first chamber, a second chamber, and a third chamber are formed inside the integrated housing;
the first chamber is configured to house the motor assembly and the pump body;
the second chamber is configured to house the controller assembly; and
the third chamber is configured to house an external device.

In an optional embodiment, the motor assembly includes a motor shaft and a motor rotor;
the motor shaft extends through the pump body;
the motor rotor is connected to the motor shaft for driving the motor shaft;
a first end of the motor shaft is connected to the pump body for driving a gear of the pump body; and
an end portion of a second end of the motor shaft is configured for speed signal excitation.

In an optional embodiment, the motor assembly further includes a sliding bearing for supporting the first end of the motor shaft.

In an optional embodiment, the motor assembly further includes a shielding sleeve, a sealing ring, and a support ring;
the shielding sleeve, a motor coil, and the support ring are located inside the first chamber;
the shielding sleeve is configured to seal the motor rotor cavity within the first chamber;
the sealing ring is located at a connection between the shielding sleeve and the pump body, as well as a connection between the shielding sleeve and an inner surface of the first chamber;
the support ring is configured to support the shielding sleeve; and
each of both ends of the shielding sleeve is provided with the support ring, where the support ring adjacent to the pump body is molded within the shielding sleeve.

In an optional embodiment, the motor shaft is implemented as a hollow motor shaft;
when the motor pump operates, the medium flows from the second end of the motor shaft towards the first end of the motor shaft; and
when the motor shaft is connected to the pump body cavity, a shaft sleeve of the motor shaft is provided with an oil groove.

In an optional embodiment, the pump module includes a pump cover housing, a medium exchange opening, and a one-way valve;
the medium exchange opening is located at a top of the pump cover housing and is configured to exchange the medium for operation of the motor pump;
when the pump module operates, a high-pressure pump cover cavity and a low-pressure pump cover cavity are formed within the pump module; and
the one-way valve is configured to selectively deliver, from the high-pressure pump cover cavity to the low-pressure pump cover cavity, a high-pressure medium leaking from the medium passage.

In an optional embodiment, two medium exchange openings and two oil openings are provided;
the pump cover housing is provided with a one-way valve mounting hole;
the one-way valve is located within the one-way valve mounting hole;
the one-way valve mounting hole and the pump cover cavity form the medium passage; and
the one-way valve is provided with a one-way valve plug that is located within the one-way valve mounting hole.

In an optional embodiment, oil passages defined by two one-way valve mounting holes are parallel to each other;
or
oil passages defined by two one-way valve mounting holes form an obtuse angle.

In an optional embodiment, the external device includes at least one of an external wire and a speed sensor.

The technical solutions provided in the embodiments of the present disclosure achieve at least the following beneficial effects:

During the design of the pump body structure assembly for the motor pump, the normal operation of the motor pump is ensured by coaxially arranging the controller module and the motor module. Furthermore, a cavity for forced convective heat exchange is formed within the motor pump structure, thereby achieving forced convective heat exchange. The heat inside the motor is carried away by the leaking medium, thereby improving the heat dissipation effect of the motor. Thus, the motor pump can operate for a longer time, and its performance and service life are improved.

### DESCRIPTION OF THE DRAWINGS

In order to describe the technical solutions in the embodiments of the present disclosure more clearly, the accompanying drawings required for describing the embodiments are briefly described below. Apparently, the accompanying drawings described below are only some embodiments of the present disclosure. Those of ordinary skill in the art may further derive other drawings from these drawings without creative efforts.
FIG. 1 illustrates a structural block diagram of a motor pump provided by an exemplary embodiment of the present disclosure;
FIG. 2 illustrates a schematic structural diagram of a motor pump provided by an exemplary embodiment of the present disclosure;
FIG. 3 illustrates a structural block diagram of an oil path of a motor pump provided by an exemplary embodiment of the present disclosure;
FIG. 4 illustrates a partial cross-sectional schematic diagram of a pump module provided by an exemplary embodiment of the present disclosure;
FIG. 5 illustrates a schematic structural diagram of a combination of an axial compensation structure and a radial compensation structure provided by an exemplary embodiment of the present disclosure;
FIG. 6 illustrates a schematic diagram of a pump module structure provided by an exemplary embodiment of the present disclosure in a top view;
FIG. 7 illustrates a schematic diagram of an oil path direction of a motor pump provided by an exemplary embodiment of the present disclosure;
FIG. 8 illustrates a cross-sectional schematic diagram of a motor shaft sleeve within a pump body cavity provided by an exemplary embodiment of the present disclosure; and
FIG. 9 illustrates a cross-sectional schematic diagram of a motor shaft sleeve within a pump cover cavity provided by an exemplary embodiment of the present disclosure.

### SPECIFIC IMPLEMENTATIONS

In order to make the objectives, technical solutions and advantages of the present disclosure clearer, embodiments of the present disclosure will be further described in detail below with reference to the accompanying drawings.

The motor pump provided in the embodiments of the present disclosure may be applied to industrial transmission, and may also be used in automotive active suspensions to act as an oil pump for supplying oil to the shock absorber.

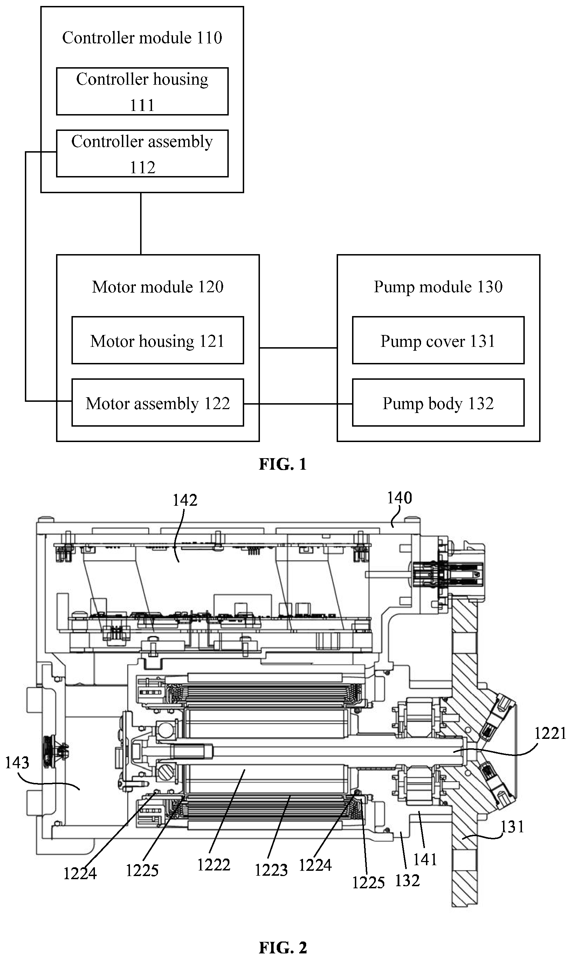

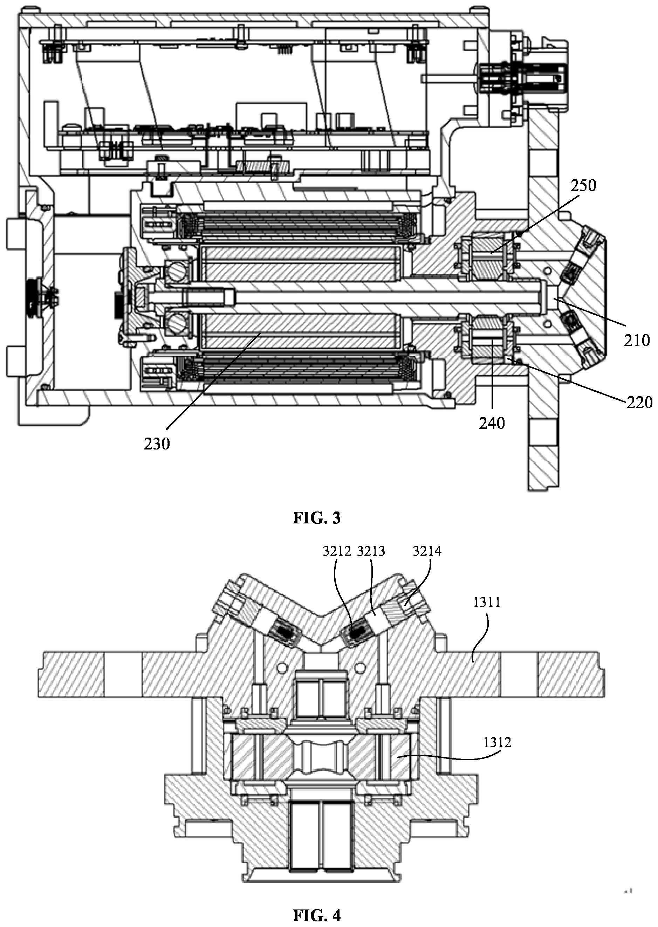

FIG. 1 illustrates a structural block diagram of a motor pump provided by an exemplary embodiment of the present disclosure, and FIG. 2 illustrates a schematic structural diagram of a motor pump provided by an exemplary embodiment of the present disclosure. FIG. 3 illustrates a structural block diagram of an oil path of a motor pump provided by an exemplary embodiment of the present disclosure. Referring to FIG. 1 to FIG. 3, the motor pump includes controller module 110, motor module 120, and pump module 130. The controller module 110 is configured to send a driving signal to the motor module 120 and transmit electric energy, such that the motor module converts the electric energy into mechanical energy so as to drive the pump module 130. The controller module 110 includes controller housing 111 and controller assembly 112. The motor module 120 includes motor housing 121 and motor assembly 122. The pump module 130 includes pump cover 131 and pump body 132. The controller assembly 112 is electrically connected to the motor assembly 122. The motor assembly 122 is connected to the pump body 132. The pump body 132 is partially located inside the motor housing 121, while the pump cover 131 protrudes from the motor housing 121, and the pump module 130 is coaxially connected to the motor module 120. The controller housing 111 is stacked with the motor housing 121.

In this case, referring to FIG. 3, pump cover cavity 210 and pump body cavity 220 are formed inside the pump module.

In an embodiment of the present disclosure, no directly connected oil path is designed between the pump cover cavity and the pump body cavity.

The pump body and an interior of the motor housing enclose a motor rotor cavity 230.

The pump cover cavity 210, the pump body cavity 220, and the motor rotor cavity 230 are configured to form a medium passage, and a medium flows into the motor rotor cavity via the pump body cavity to achieve forced convective heat exchange.

In an embodiment of the present disclosure, the pump module is an internal gear pump module. Referring to FIG. 3, during the motion process of the motor, high-pressure oil cavity 240 and low-pressure oil cavity 250 are formed within the pump body cavity. The positions of the high-pressure oil leakage region and the low-pressure oil region will be changed according to the four-quadrant operating principle of the internal gear pump. The present disclosure has no limitation on the specific positions of the high-pressure oil leakage region and the low-pressure oil region. In an embodiment of the present disclosure, referring to FIG. 4, the medium in the high-pressure oil cavity leaks to first enter the high-pressure oil cavity 240 in the pump body cavity, flow into the motor rotor cavity 230 via the high-pressure oil cavity 240, and finally flows into the low-pressure oil cavity 250. During the operating process of the motor pump, the flow of the medium acts on the forced convective heat dissipation of the motor.

In conclusion, according to the motor pump provided by the embodiments of the present disclosure, during the design of the pump body structure assembly for the motor pump, the normal operation of the motor pump is ensured by coaxially arranging the controller module and the motor module. Furthermore, a cavity for forced convective heat exchange is formed within the motor pump structure, thereby achieving forced convective heat exchange. The heat inside the motor is carried away by the leaking medium, thereby improving the heat dissipation effect of the motor. Thus, the motor pump can operate for a longer time, and its performance and service life are improved.

Next, the actual application scenario of the corresponding suspension motor pump and the optimal design within the motor pump in the embodiments of the present disclosure are explained.

In an optional embodiment, the motor housing 121 and the controller housing 111 are implemented as integrated housing 140. First chamber 141, second chamber 142, and third chamber 143 are formed inside the integrated housing. The first chamber 141 is configured to house the motor assembly 122 and the pump body 132. The second chamber 142 is configured to house the controller assembly 112. The third chamber 143 is configured to house external device 150.

That is to say, in the embodiments of the present disclosure, the controller module, the motor module, and the pump module are implemented as an integrated structure. This structure can be implemented as metal frames connected to one another. The metal frames may be connected by means of bolted connection. The present disclosure has no limitation on the specific connection manner between the metal frames.

In an optional embodiment, the external device includes at least one of an external wire and a speed sensor.

In this case, for specific structure, reference may be made to FIG. 2. When assembled, the motor housing and the controller housing are divided into three chambers. The first chamber is a motor chamber configured to house the motor assembly. A bearing cavity is designed on the left side of the first chamber and configured to mount a motor rotor bearing. A bearing cover is designed on the left side of the bearing cavity to seal the motor rotor cavity. The motor cover on the right side of the first chamber is designed as the pump body part of the pump assembly. The second chamber is located on the left side of the first chamber and is configured for the three-phase wires of the motor to exit and for mounting of the speed sensor. The second chamber is designed to be sealed by a rear end cover. The third chamber is located at an upper part of the housing and is configured to mount the controller. The third chamber is in communication with the second chamber. The third chamber is designed to be sealed by an upper cover. The third chamber is provided with high-voltage and low-voltage connector mounting holes for mounting high-voltage and low-voltage connectors.

In an optional embodiment, referring to FIG. 2, the motor assembly 122 includes motor shaft 1221 and motor rotor 1222. The motor shaft 1221 extends through the pump body 132. The motor rotor 1222 is connected to the motor shaft 1221 for driving the motor shaft 1221. A first end of the motor shaft 1221 is connected to the pump cover 131 and configured to drive the pump assembly. A second end of the motor shaft 1221 is electrically connected to the third chamber 143 and configured to connect the external device. In this case, the motor shaft 1221 is a hollow motor shaft. This allows the medium to flow from the bottom of the motor rotor cavity into the pump cover cavity, while reducing rotational inertia and improving response time.

In an embodiment of the present disclosure, the medium flowing into the motor rotor cavity traverses the entire rotor cavity towards the other end of the motor rotor cavity. At the other end, the medium flows into oil holes of magnetic steel bolts and then into the second end of the motor shaft. Throughout this process, forced convective heat exchange occurs with the motor stator and rotor, carrying away the heat generated by the motor. To enable more medium to flow into the motor rotor cavity for heat dissipation, no oil passage is designed below the pump cover bearing. This ensures that as much leaking medium as possible flows into the motor rotor cavity before oil returning.

In an embodiment of the present disclosure, in a case that the motor shaft extends through the pump body, the motor rotor is connected to the motor shaft for driving the motor shaft. The first end of the motor shaft is connected to the pump body for driving a gear of the pump body. An end portion of the second end of the motor shaft is configured for speed signal excitation.

In an optional embodiment, the motor assembly 122 further includes shielding sleeve 1223, sealing ring 1224, and support ring 1225. The shielding sleeve 1223 and the support ring 1225 are located inside the first chamber. The shielding sleeve 1223 is configured to seal the first chamber and to form the motor rotor cavity. The sealing ring 1224 is located at a connection between the shielding sleeve 1223 and the pump body, as well as a connection between the shielding sleeve 1223 and an inner surface of the first chamber. The support ring 1225 is configured to support the shielding sleeve 1223. In an embodiment of the present disclosure, there are correspondingly two sealing rings 1224 and two support rings 1225, which are located on the side close to the pump body cavity and the side away from the pump body cavity, respectively. It is to be noted that the end of the support ring 1225 close to the pump body cavity is molded inside the shielding sleeve.

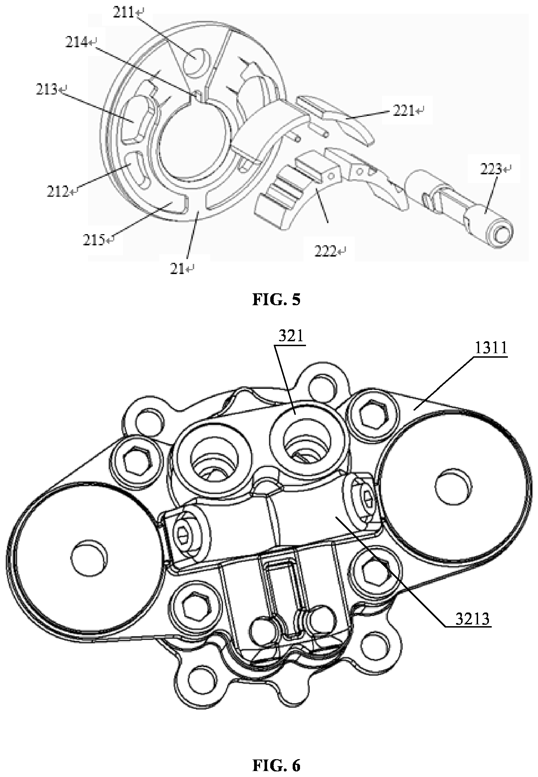

In an optional embodiment, referring to FIG. 4, the pump module includes pump cover housing 1311 and oil pumping component 1312. The oil pumping component 1312 is located within the pump body cavity, and an accommodating cavity and a medium passage are formed inside the pump module. When the accommodating cavity is formed inside the pump cover housing 1311, the oil pumping component 1312 is located within the accommodating cavity. In an embodiment of the present disclosure, to achieve gap compensation during the operating process, and with reference to FIG. 5, the oil pumping component 1312 has axial compensation structure 21 and radial compensation structure 22. The axial compensation structure 21 is configured to achieve axial gap compensation for the oil pumping component during the operation of the four-quadrant operational internal gear pump. The radial compensation structure 22 is configured to reduce a radial gap of the oil pumping component during the operation of the four-quadrant operational internal gear pump.

Next, the axial compensation structure and the radial compensation structure involved in the embodiments of the present disclosure will be described with reference to FIG. 5.

In an optional embodiment, the axial compensation structure 21 includes axial plate 211, and the radial compensation structure 22 includes oil distribution disc 221 and oil distribution disc holder 222. The axial plate 21 is provided with at least one through hole. A surface of the oil distribution disc holder 222 includes at least one slot, where the number and positions of the through holes correspond to the number and positions of the slots. The oil distribution disc 221 is fit with the surface of the oil distribution disc holder 222 having the slots, thereby forming an oil passage. When the four-quadrant operational internal gear pump operates, the medium flows through a passage formed by the through holes and the oil passage.

In this case, the axial plate 21 is implemented as an axisymmetric structure. The axial plate 21 includes first through hole 211, second through hole 212, third through hole 213, fourth through hole 214, and sunken groove 215. The first through hole is located at the axis of the axisymmetric structure and is implemented as an axisymmetric shape for positioning and mounting. In practical application, the first through hole may be implemented as a circular through hole for matching with stop pin 223. There are two sunken grooves, two second through holes, and two third through holes, which are distributed in an axisymmetric manner. The second through holes and the third through holes are located inside the sunken grooves. The sunken grooves have connection portions configured for the medium to pass therethrough. The second through holes and the third through holes are configured to connect to the oil inlet and outlet of the pump cover. The fourth through hole is located at the axis of the axisymmetric structure and forms a passage for the leaking medium to flow therethrough during the operation of the pump head assembly. In an optional embodiment, the numbers and positions of the oil distribution discs and the oil distribution disc holders correspond to those of the sunken grooves, and the radial compensation structure further includes the stop pin 223. The stop pin 223 is in contact with the oil distribution disc 221 and the oil distribution disc holder 222, and is configured to support the oil distribution disc 221 and the oil distribution disc holder 222 and limit the relative displacement of the oil distribution disc and the oil distribution disc holder.

It is to be noted that, in an embodiment of the present disclosure, a medium exchange opening for the main oil path circulation and a one-way valve for realizing internal circulation as well as a corresponding one-way valve mounting hole are designed. FIG. 6 is a structural diagram of a pump cover provided by an exemplary embodiment of the present disclosure in a top view. That is to say, in an embodiment of the present disclosure, the pump module 130 includes pump cover housing 1311, medium exchange opening 321, and one-way valve 3212.

The medium exchange opening 321 is located at a top of the pump cover housing 1311 and is configured to exchange the medium for operation of the motor pump.

When the pump module 130 operates, high-pressure pump cover cavity 240 and low-pressure pump cover cavity 250 are formed within the pump module 130.

The one-way valve 3212 is configured to deliver, from the high-pressure pump cover cavity 240 to the low-pressure pump cover cavity 250, a high-pressure medium leaking from the medium passage.

In some embodiments of the present disclosure, with reference to FIG. 4 and FIG. 6, the pump cover housing 1311 is provided with two medium exchange openings 321 adapted to the inflow and outflow of the medium from the main oil path.

The pump cover is designed with two one-way valve mounting holes 3213. The two one-way valve mounting holes 3213 are positioned within the same plane and at an included angle which may be 180° or an obtuse angle. That is to say, oil passages formed by the two one-way valve mounting holes 3212 may be parallel to each other or form an included angle. Optionally, the included angle may be at least one of an acute angle and an obtuse angle. Preferably, to make the structure compact, the included angle is implemented as the obtuse angle. The one-way valve mounting hole 3212 has one end communicating with the pump cover volume cavity 210 and the other end designed to be sealed by a plug 3214. The one-way valve mounting hole and the pump cover cavity together form a medium passage. The medium passage is adapted to the function of the one-way valve such that a high-pressure medium leaking from the medium passage is selectively delivered to the low-pressure pump cover cavity from the high-pressure pump cover cavity. Optionally, the form of the medium passage is not limited in the present disclosure. As shown in FIG. 4, the medium passage may be implemented as a straight oil passage.

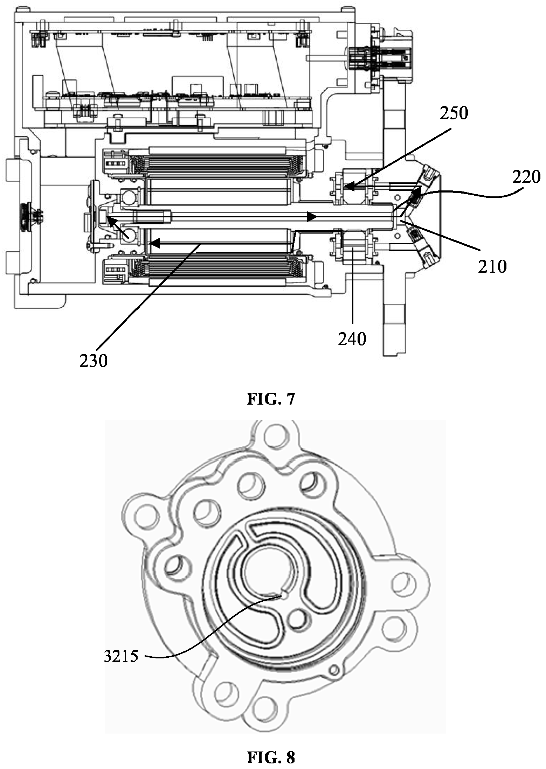

In combination with the arrangement manner of the one-way valve, referring to FIG. 7, in an embodiment of the present disclosure, under the schematic configuration of the high-pressure oil cavity 240 and the low-pressure oil cavity 250 as illustrated, the high-pressure medium that has leaked from the high-pressure oil cavity enters the pump body cavity 220, then flows to the motor rotor cavity 230 through the pump body cavity 220, enters the oil passage formed within the hollow motor shaft from the end of the motor rotor cavity 230 away from the pump cover, and enters the pump cover cavity 210 through the motor shaft. After entering the pump cover cavity, the medium passes through the oil passage where the one-way valve 3212 is located and enters the low-pressure oil cavity 250. Thus, the cavity allowing for forced convective heat exchange is formed inside the motor pump structure, thereby achieving forced convective heat exchange. During this process, the pump cover cavity 210 will continuously remain a low pressure.

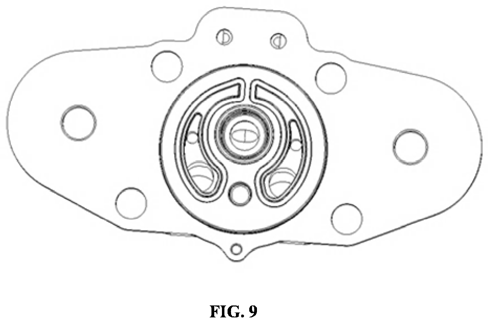

To realize the aforementioned oil path design, in an embodiment of this application, referring to FIG. 8 and FIG. 9, when the motor shaft is connected to the pump body cavity as shown in FIG. 8, a shaft sleeve of the motor shaft is provided with an oil groove 3215. In contrast, as shown in FIG. 9, when the motor shaft is connected to the pump cover cavity, the shaft sleeve of the motor shaft is not provided with the oil groove. The purpose of this design is to omit the oil passage design in the pump cover cavity, thereby reducing the flow of the medium into the pump cover cavity and directing the medium to flow into the motor rotor cavity. This enables the medium to enter the forced convection cycle, thus achieving further efficient heat dissipation. Conversely, in the pump body cavity part, the medium may pass through the oil groove to form a flow path within the pump body cavity.

In an optional embodiment, the one-way valve is in interference fit with the one-way valve mounting hole, or the one-way valve is in threaded connection with the one-way valve mounting hole. Correspondingly, the one-way valve is provided with a sealing ring. The sealing ring is in contact with both the one-way valve and the medium exchange opening, and is configured to reinforce the connection between the one-way valve and the medium exchange opening.

That is to say, in some application scenarios, two one-way valves are designed on the pump cover. The connection between each one-way valve and the pump cover may be designed as threaded connection or interference fit, preferably screw-thread fit. Additionally, a sealing O-ring is designed to facilitate assembly and maintenance.

The foregoing are merely descriptions of the optional embodiments of the present disclosure, and are not intended to limit the present disclosure. Any modifications, equivalent replacements and improvements made within the spirit and principle of the present disclosure should be included in the protection scope of the present disclosure.

## Claims

1. A motor pump, comprising: a controller module, a motor module, and a pump module;
wherein the controller module is configured to send a driving signal to the motor module to drive the pump module;
the controller module comprises a controller housing and a controller assembly;
the motor module comprises a motor housing and a motor assembly;
the pump module comprises a pump cover and a pump body;
the controller assembly is electrically connected to the motor assembly;
the motor assembly is connected to the pump body;
the pump body is partially located inside the motor housing, the pump cover protrudes from the motor housing, and the pump module is coaxially connected to the motor module;
the controller housing is stacked with the motor housing;
a pump cover cavity and a pump body cavity are formed inside the pump module;
the pump body and an interior of the motor housing enclose a motor rotor cavity;
the pump cover cavity, the pump body cavity, and the motor rotor cavity are configured to form a medium passage, and a medium flows into the motor rotor cavity via the pump body cavity to achieve forced convective heat exchange.

2. The motor pump according to claim 1, wherein the motor housing and the controller housing are implemented as an integrated housing;
a first chamber, a second chamber, and a third chamber are formed inside the integrated housing;
the first chamber is configured to house the motor assembly and the pump body;
the second chamber is configured to house the controller assembly; and
the third chamber is configured to house an external device.

3. The motor pump according to claim 2, wherein the motor assembly comprises a motor shaft and a motor rotor;
the motor shaft extends through the pump body;
the motor rotor is connected to the motor shaft for driving the motor shaft;
a first end of the motor shaft is connected to the pump body for driving a gear of the pump body; and
an end portion of a second end of the motor shaft is configured for speed signal excitation.

4. The motor pump according to claim 3, wherein the motor assembly further comprises a sliding bearing for supporting the first end of the motor shaft.

5. The motor pump according to claim 3, wherein the motor assembly further comprises a shielding sleeve, a sealing ring, and a support ring;
the shielding sleeve, a motor coil, and the support ring are located inside the first chamber;
the shielding sleeve is configured to seal the rotor cavity within the first chamber;
the sealing ring is located at a connection between the shielding sleeve and the pump body, as well as a connection between the shielding sleeve and an inner surface of the first chamber;
the support ring is configured to support the shielding sleeve; and
each of both ends of the shielding sleeve is provided with the support ring, wherein the support ring adjacent to the pump body is molded within the shielding sleeve.

6. The motor pump according to claim 2, wherein the motor shaft is implemented as a hollow motor shaft;
when the motor pump operates, the medium flows from the second end of the motor shaft towards the first end of the motor shaft; and
when the motor shaft is connected to the pump body cavity, a shaft sleeve of the motor shaft is provided with an oil groove.

7. The motor pump according to claim 2, wherein the pump module comprises a pump cover housing, a medium exchange opening, and a one-way valve;
the medium exchange opening is located at a top of the pump cover housing and is configured to exchange the medium for operation of the motor pump;
when the pump module operates, a high-pressure pump cover cavity and a low-pressure pump cover cavity are formed within the pump module; and
the one-way valve is configured to selectively deliver, from the high-pressure pump cover cavity to the low-pressure pump cover cavity, a high-pressure medium leaking from the medium passage.

8. The motor pump according to claim 7, wherein two medium exchange openings and two oil openings are provided;
the pump cover housing is provided with a one-way valve mounting hole;
the one-way valve is located within the one-way valve mounting hole;
the one-way valve mounting hole and the pump cover cavity form the medium passage; and
the one-way valve is provided with a one-way valve plug that is located within the one-way valve mounting hole.

9. The motor pump according to claim 8, wherein oil passages defined by two one-way valve mounting holes are parallel to each other;
or,
oil passages defined by two one-way valve mounting holes form an included angle.

10. The motor pump according to claim 2, wherein the external device comprises at least one of an external wire and a speed sensor.
